# EUROPÄISCHE PATENTANMELDUNG

(11) **EP 1 529 976 A1**
(43) Veröffentlichungstag der Anmeldung: **11.05.2005**
(21) Anmeldenummer: 04024117.6
(22) Anmeldetag: 09.10.2004
(51) Int. Cl.: F16C 35/077, F16C 27/06, F16H 57/00

(54) **Schalldämpfungsanordnung**

(30) Priorität: 06.11.2003 DE 10352322
(71) Anmelder: Eichelhardter Werkzeug- und Maschinenbau GmbH, 57612 Eichelhardt (DE)
(72) Erfinder: Schmidt, Ralf, 57629 Mörsbach (DE)
(74) Vertreter: Müller, Thomas Michael, Dipl.-Ing.

(57) **Zusammenfassung**

Schalldämpfungsanordnung innerhalb eines Antriebsstrangs, insbesondere eines Getriebes, umfassend einen Drehkörper 1 zum Übertragen von Drehmoment, der um eine Drehachse 2 drehbar angeordnet ist, sowie ein ringförmiges Dämpfungselement 8 aus einem Elastomer, das mit Vorspannung gegen den Drehkörper 1 gehalten und koaxial zur Drehachse 2 angeordnet ist.

## Beschreibung

Die Erfindung betrifft eine Schalldämpfungsanordnung innerhalb eines Antriebsstrangs, insbesondere eines Getriebes. Durch die Schalldämpfungsanordnung wird eine Reduzierung der Körperschallabstrahlung von Oberflächen zum Beispiel an Zahnrädern, Metallrädern oder Wälzlagern erreicht.

Üblicherweise werden Antriebs- und Lagergeräusche an oder in Antrieben, die mit hohen Drehzahlen betrieben werden, durch den erheblichen Aufwand einer Außendämmung oder einer Abschirmung im Außenbereich reduziert. Hierdurch ergeben sich jedoch insbesondere bei Getrieben ein erhöhter Platzbedarf, geringe Wärmeabgabe sowie ein höheres Eigengewicht. Zudem sind die bisher bekannten Maßnahmen äußerst kostenintensiv.

Eine Vorrichtung zur Körperschallreduzierung ist beispielsweise aus der DE 297 20 918 U1 bekannt, bei der eine Schall erzeugende Hydraulikpumpe und ein den Hauptteil der Schallenergie abstrahlender Pumpenträger mittels Dämpfungselementen hinsichtlich der Schwingungs- und Schallübertragung voneinander entkoppelt sind. Schallbrücken zwischen der Hydraulikpumpe und dem Pumpenträger werden dadurch vermieden, dass ringförmige Blechlamellen zwischen ihnen angeordnet sind und als Dämpfungselemente dienen. Die Dämpfungselemente, die zugleich die Befestigungselemente darstellen, sind jedoch aufwendig, da eine ausrechende Stabilität der Verbindung gewährleistet sein muss.

Aus der EP 647 796 A1 ist ein Schwingungstilger bekannt, der einen Federring aus Gummi umfasst, der auf eine Welle aufgeschoben wird. Um den Federring wird ein Trägheitsring angeordnet, der fest auf dem Federring sitzt und dazu dient, die Eigenfrequenz der Welle derart zu ändern, dass keine Resonanzschwingung im üblichen Betriebszustand erreicht wird. Hierdurch ergeben sich jedoch deutlich höhere Massen der Welle.

Aufgabe der vorliegenden Erfindung ist es, eine Schalldämpfungsanordnung innerhalb eines Antriebsstrangs, insbesondere eines Getriebes, bereit zu stellen, welche auch nachträglich ohne großen Aufwand vorgesehen werden kann und welche kostengünstig gestaltet ist.

Die Aufgabe wird erfindungsgemäß durch eine Schalldämpfungsanordnung innerhalb eines Antriebsstrangs, insbesondere eines Getriebes, umfassend
einen Drehkörper zum Übertragen von Drehmoment, der um eine Drehachse drehbar angeordnet ist, sowie
ein ringförmiges Dämpfungselement aus einem Elastomer, das mit Vorspannung gegen den Drehkörper gehalten und koaxial zur Drehachse angeordnet ist,
gelöst.

Das Dämpfungselement ist vorzugsweise nahe dem Außenumfang des Drehkörpers angeordnet, da in diesem Bereich Schwingungen hoher Amplituden auftreten, die durch eine Anordnung des Dämpfungselements in diesem Bereich wirksam gedämpft werden können.

Das Dämpfungselement kann in Form eines O-Rings vorgesehen sein, der in einer Umfangsnut des Drehkörpers mit Vorspannung sitzt.

Wenn das Dämpfungselement in einer Innenumfangsnut sitzt, kann das Dämpfungselement mittels eines Sprengrings in dieser gehalten sein. Ebenso kann hierzu das Dämpfungselement in Form eines Sprengrings mit einer Ummantelung aus einem Elastomer vorgesehen sein, so dass das Dämpfungselement mit Vorspannung in der Innenumfangsnut des Drehkörpers gehalten ist.

Ist das Dämpfungselement in einer Außenumfangsnut des Drehkörpers angeordnet, sitzt dieses durch die Eigenspannung mit Vorspannung in der Nut.

Ferner kann das Dämpfungselement in einer Umfangsnut eines separaten Halteelements sitzen und aus dieser axial vorstehen. Das Halteelement ist dann mit Vorspannung axial gegen den Drehkörper gehalten, wobei das Dämpfungselement zwischen dem Halteelement und dem Drehkörper angeordnet ist.

Ferner wird die Aufgabe durch eine Schalldämpfungsanordnung innerhalb eines Antriebsstrangs, insbesondere eines Getriebes, umfassend
einen Drehkörper zum Übertragen von Drehmoment, das mittels eines Wälzlagers in einem Gehäuse um eine Drehachse drehbar gelagert ist,
zumindest ein ringförmiges Dämpfungselement aus einem Elastomer, das zwischen dem Wälzlager und dem Gehäuse mit Vorspannung gegen das Wälzlager gehalten und koaxial zur Drehachse angeordnet ist,
gelöst.

Das Wälzlager ist mit einem Außenring in einer Lagerbohrung angeordnet, wobei in der Lagerbohrung eine Umfangsnut vorgesehen ist, in der das Dämpfungselement sitzt und gegen den Außenring gehalten ist.

Bei dieser Anordnung kann das Dämpfungselement axial gegen den Außenring oder radial gegen den Außenring gehalten sein. Ferner sind mehrere Dämpfungselemente möglich, die sowohl axial als auch radial gegen den Außenring gehalten sind.

Bevorzugte Ausführungsbeispiele werden im folgenden anhand der Zeichnungen näher erläutert.

Hierin zeigt
- Figur 1: einen Querschnitt eines Stirnrades mit einem Dämpfungselement in Form eines O-Rings, der durch einen Sprengring in einer Innenumfangsnut gehalten ist,
- Figur 2: einen Querschnitt eines Dämpfungselements in Form eines ummantelten Sprengrings,
- Figur 3: einen Querschnitt eines Stirnrades mit einem Dämpfungselement in einer Außenumfangsnut,
- Figur 4: einen Querschnitt durch ein Zahnrad mit einem Dämpfungselement, welches an einem Halteelement angeordnet ist und
- Figur 5: eine Wälzlagerung mit Dämpfungselementen.

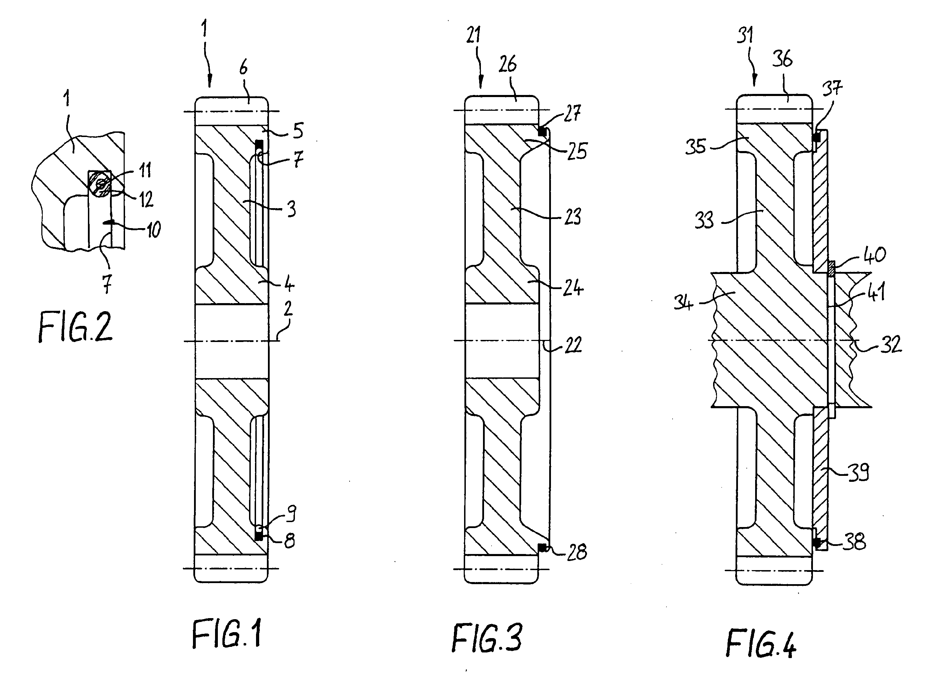

Figur 1 zeigt einen Drehkörper in Form eines herkömmlichen Stirnrades 1, das um eine Drehachse 2 drehbar angeordnet ist. Das Stirnrad 1 weist einen kreisringförmigen Verbindungsabschnitt 3 auf, der zwischen einem Nabenabschnitt 4 und einem Zahnabschnitt 5 angeordnet ist. Der Verbindungsabschnitt 3 ist dünner ausgeführt als der Nabenabschnitt 4 und der Zahnabschnitt 5. Im Übergang vom Verbindungsabschnitt 3, der zum die Zähne 6 des Stirnrads 1 Zahnabschnitt 5 trägt, ist eine Innenumfangsnut 7 angeordnet. In dieser sitzt ein Dämpfungselement in Form eines O-Rings 8 aus einem Elastomer, der mittels eines herkömmlichen Runddrahtsprengrings 9 in der Innenunfamgsnut 7 mit Vorspannung gehalten ist.

Der Vorteil dieser Ausbildung ist, dass das bereits vorhandene Stirnrad 1 eines Getriebes durch einfache Nachbearbeitung, d.h. durch Einbringen einer Innenumfangnut 7 und einsetzen eines Dämpfungselements, dahingehend verbessert werden kann, dass die Schallabstrahlung reduziert wird. Ferner können Standardbauteile, wie der O-Ring 8 und der Runddrahtsprengring 9, verwendet werden.

Figur 2 zeigt einen Teilschnitt durch eine andere Ausführungsform eines Dämpfungselements 10 in Form eines Sprengrings 11, der mit einem Elastomer 12 ummantelt ist. Hierdurch ist lediglich ein Bauteil erforderlich, welches in der Innenumfangsnut 7 sitzt.

Figur 3 zeigt eine weitere Ausführungsform einer erfindungsgemäßen Schalldämpfungsanordnung, wobei Bauteile, die mit der Ausführungsform gemäß Figur 1 übereinstimmen, mit Bezugszeichen versehen sind, die um den Wert 20 erhöht sind.

Das Stirnrad 21 weist im Bereich des Zahnabschnitts 25 eine Außenumfangsnut 27 auf, in der der O-Ring 28 sitzt. Ein Sprengring ist nicht erforderlich, da die Eigenspannung des O-Rings 28 ausreicht, um den O-Ring in der Außenumfangsnut 27 zu halten.

Figur 4 zeigt eine dritte Ausführungsform einer erfindungsgemäßen Schalldämpfungsanordnung, wobei Bauteile, die mit Bauteilen der Ausführungsform gemäß Figur 1 übereinstimmen, mit Bezugszeichen versehen sind, die um den Wert 30 erhöht sind.

Gegen das Stirnrad 31 ist axial ein Halteelement 39 in Form einer Scheibe gehalten. Das Halteelement 39 ist durch einen Sicherungsring 40, der in einer Umfangsnut 41 des Stirnrades sitzt, befestigt. Das Halteelement 39 weist eine Umfangsnut 37 auf, die dem Stirnrad 31 zugewandt ist. In der Umfangsnut 37 sitzt ein O-Ring 38, der aus der Umfangsnut 37 axial in Richtung zum Stirnrad 31 vorsteht und gegen dieses in Anlage gehalten ist. Alternativ kann die Umfangsnut 37 auch in dem Stirnrad 31 vorgesehen sein.

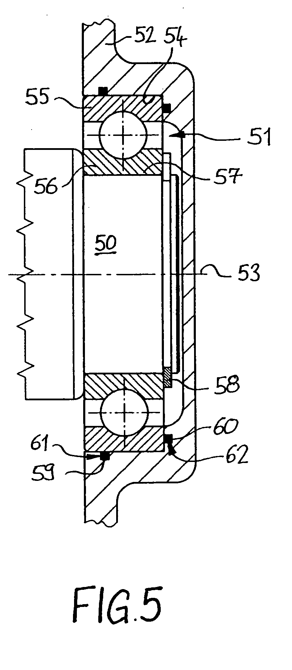

Figur 5 zeigt eine Schalldämpfungsanordnung für einen Drehkörper in Form einer Welle 50, die mittels eines Wälzlagers 51 in einem Gehäuse 52, beispielsweise eines Getriebes, um eine Drehachse 53 drehbar gelagert ist.

Das Wälzlager 51 ist in einer Lagerbohrung 54 des Gehäuses 52 angeordnet. In der Lagerbohrung 54 ist ein Außenring 55 angeordnet. Ein Innenring des Wälzlagers 51 sitzt auf einem Lagerabschnitt 57 der Welle 50 und ist mittels eines Sicherungsrings 58 auf diesem gehalten.

In der als Blindbohrung ausgebildeten Lagerbohrung 54 ist eine Innenumfangsnut 59 sowie eine Umfangsnut 60 vorgesehen. In der Innenumfangsnut 59 sitzt ein O-Ring 61, der radial in Anlage zum Außenring 55 gehalten ist. In der Umfangsnut 60 ist ein O-Ring 62 axial gegen den Außenring 55 gehalten. Beide O-Ringe 61, 62 dienen zur Dämpfung der Schwingungen und damit der Schallabstrahlung im Bereich der Wälzlagerung.

### Bezugszeichenliste

- 1: Stirnrad
- 2: Drehachse
- 3: Verbindungsabschnitt
- 4: Nabenabschnitt
- 5: Zahnabschnitt
- 6: Zahn
- 7: Innenumfangsnut
- 8: O-Ring
- 9: Runddrahtsprengring
- 10: Dämpfungselement
- 11: Sprengring
- 12: Ummantelung

- 21: Stirnrad
- 22: Drehachse
- 23: Verbindungsabschnitt
- 24: Nabenabschnitt
- 25: Zahnabschnitt
- 26: Zahn
- 27: Außenumfangsnut
- 28: O-Ring

- 31: Stirnrad
- 32: Drehachse
- 33: Verbindungsabschnitt
- 34: Nabenabschnitt
- 35: Zahnabschnitt
- 36: Zahn
- 37: Umfangsnut
- 38: O-Ring
- 39: Halteelement
- 40: Sicherungsring
- 41: Umfangsnut

- 50: Welle
- 51: Wälzlager
- 52: Gehäuse
- 53: Drehachse
- 54: Lagerbohrung
- 55: Außenring
- 56: Innenring
- 57: Lagerabschnitt
- 58: Sicherungsring
- 59: Innenumfangsnut
- 60: Umfangsnut
- 61: O-Ring
- 62: O-Ring

## Patentansprüche

1. Schalldämpfungsanordnung innerhalb eines Antriebsstrangs, insbesondere eines Getriebes, umfassend
einen Drehkörper (1, 21, 31) zum Übertragen von Drehmoment, der um eine Drehachse (2, 22, 32) drehbar angeordnet ist, sowie
ein ringförmiges Dämpfungselement (8, 28, 38) aus einem Elastomer, das mit Vorspannung gegen den Drehkörper (1, 21, 31) gehalten und koaxial zur Drehachse (2, 22, 32) angeordnet ist.

2. Schalldämpfungsanordnung nach Anspruch 1,
**dadurch gekennzeichnet,**
**dass** das Dämpfungselement (8, 28, 38) nahe dem Außenumfang des Drehkörpers (1, 21, 31) angeordnet ist.

3. Schalldämpfungsanordnung nach einem der Ansprüche 1 oder 2,
**dadurch gekennzeichnet,**
**dass** das Dämpfungselement in Form eines O-Rings (8, 28) vorgesehen ist und in einer Umfangsnut (7, 27) des Drehkörpers (1, 21) mit Vorspannung sitzt.

4. Schalldämpfungsanordnung nach Anspruch 3,
**dadurch gekennzeichnet,**
**dass** das Dämpfungselement (8) mittels eines Sprengrings (9) in einer Innenumfangsnut (7) gehalten ist.

5. Schalldämpfungsanordnung nach einem der Ansprüche 1 oder 2,
**dadurch gekennzeichnet,**
**dass** das Dämpfungselement (10) in Form eines Sprengrings (11) mit einer Ummantelung (12) aus einem Elastomer vorgesehen ist, das in einer Innenumfangsnut (7) des Drehkörpers (1) sitzt.

6. Schalldämpfungsanordnung nach Anspruch 3,
**dadurch gekennzeichnet,**
**dass** das Dämpfungselement (28) mit Vorspannung in einer Außenumfangsnut (27) des Drehkörpers (21) sitzt.

7. Schalldämpfungsanordnung nach Anspruch 3,
**dadurch gekennzeichnet,**
**dass** das Dämpfungselement (38) in einer Umfangsnut (37) eines Halteelements (39) sitzt und aus dieser axial vorsteht,
**dass** das Halteelement (39) mit Vorspannung axial gegen den Drehkörper (31) gehalten ist, wobei das Dämpfungselement (38) zwischen dem Halteelement (39) und dem Drehkörper (31) angeordnet ist.

8. Schalldämpfungsanordnung innerhalb eines Antriebsstrangs, insbesondere eines Getriebes, umfassend
einen Drehkörper (50) zum Übertragen von Drehmoment, das mittels eines Wälzlagers (51) in einem Gehäuse (52) um eine Drehachse (53) drehbar gelagert ist,
zumindest ein ringförmiges Dämpfungselement (61, 62) aus einem Elastomer, das zwischen dem Wälzlager (51) und dem Gehäuse (52) mit Vorspannung gegen das Wälzlager (51) gehalten und koaxial zur Drehachse (53) angeordnet ist.

9. Schalldämpfungsanordnung nach Anspruch 8,
**dadurch gekennzeichnet,**
**dass** das Wälzlager (51) mit einem Außenring (55) in einer Lagerbohrung (54) angeordnet ist und
**dass** in der Lagerbohrung (54) eine Umfangsnut (59, 60) vorgesehen ist, in der das Dämpfungselement (61, 62) sitzt, welches gegen den Außenring (55) gehalten ist.

10. Schalldämpfungsanordnung nach Anspruch 9,
**dadurch gekennzeichnet,**
**dass** das Dämpfungselement (62) axial gegen den Außenring (55) gehalten ist.

11. Schalldämpfungsanordnung nach Anspruch 9,
**dadurch gekennzeichnet,**
**dass** das Dämpfungselement (61) radial gegen den Außenring (55) gehalten ist.
